# FASCICULE DE BREVET EUROPEEN

(11) **EP 2 794 762 B1**
(45) Date de publication et mention de la délivrance du brevet: **10.06.2020**
(21) Numéro de dépôt: 12801755.5
(22) Date de dépôt: 17.12.2012
(51) Int. Cl.: C08L 95/00, C08K 3/30, C08L 21/00, C08K 5/098, C08L 53/02, C08K 3/011, C08K 5/00

(54) **PROCEDE DE PRODUCTION D'UNE COMPOSITION BITUME/POLYMERE RETICULEE AVEC REDUCTION DES EMISSIONS DE H2S**
Verfahren zur Herstellung von vernetzten Bitumen/Polymer-Zusammensetzungen mit reduzierter H2S-Emission
METHOD FOR PRODUCING A CROSS-LINKED BITUMEN/POLYMER COMPOSITION WHILE REDUCING H2S EMISSIONS

(30) Priorité: 20.12.2011 FR 1161986
(43) Date de publication de la demande: 29.10.2014
(73) Titulaire: Total Marketing Services, 92800 Puteaux (FR)
(72) Inventeur: SCHROEDER, Soenke, 25524 Itzehoe (DE)
(74) Mandataire: Corizzi, Valérie
(86) Numéro de dépôt international: PCT/EP2012/075861
(87) Numéro de publication internationale: WO 2013/092531

(56) Documents cités:
- EP-A1- 0 421 683
- WO-A1-2009/120419
- WO-A2-2009/127604
- DE-A1-102010 035 071
- US-A- 5 277 250
- US-A- 5 558 704
- US-A- 6 057 390
- US-A1- 2005 145 137
- Anonymous: "Plant for modified bitumen production consisting of one skid structure", , 19 novembre 2007 (2007-11-19), pages 1-4, XP055035721, Extrait de l'Internet: URL:http://www.elsamexinternacional.com/ec ontent/Library/Images/Polymer.pdf [extrait le 2012-08-17]
- John Garcia: "Sulfa-Check, Hydrogen Sulfide Abatement", Crude Oil Quality Group Conference, 29 septembre 2005 (2005-09-29), pages 1-22, XP055035725, West Loop, Houston, Texas, USA Extrait de l'Internet: URL:http://www.coqa-inc.org/20050929nalco. pdf [extrait le 2012-08-17]
- Mike Nicholson ET AL: "Hydrogen Sulfide in Petroleum", , 17 juin 2009 (2009-06-17), pages 1-28, XP055035724, Extrait de l'Internet: URL:http://www.coqa-inc.org/20010531H2S.pd f [extrait le 2012-08-17]

## Description

### DOMAINE TECHNIQUE

La présente invention appartient au domaine des compositions bitumes/polymère réticulées. Plus spécifiquement, elle concerne un procédé de production d'une composition bitume/polymère réticulée avec une réduction des émissions de sulfure d'hydrogène (H₂S).

L'invention concerne également une unité de production pour la mise en œuvre d'un tel procédé.

### ART ANTERIEUR

L'utilisation du bitume dans la fabrication de matériaux pour applications routières et industrielles est connue de longue date : le bitume est le principal liant hydrocarboné utilisé dans le domaine de la construction routière ou du génie civil. Pour pouvoir être utilisé comme liant dans ces différentes applications, le bitume doit présenter certaines propriétés mécaniques et notamment des propriétés élastiques ou cohésives. Les propriétés mécaniques des compositions bitumeuses sont déterminées par des essais normalisés des différentes caractéristiques mécaniques telles que le point de ramollissement, la pénétrabilité et les caractéristiques rhéologiques en traction déterminée.

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume-polymère ayant des qualités mécaniques améliorées par rapport à celles des bitumes seuls.

Les polymères susceptibles d'être ajoutés aux bitumes sont le plus souvent des élastomères. Parmi les polymères ajoutés aux bitumes, les copolymères statistiques ou séquences d'un hydrocarbure monovinyl aromatique et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume/polymère peut être améliorée par couplage chimique du polymère au bitume, cette amélioration permettant en outre d'élargir le domaine d'utilisation des compositions bitume-polymère. Le couplage chimique du polymère au bitume consiste à réticuler le polymère au moyen d'un agent réticulant, classiquement, un composé donneur de soufre. Des compositions bitume-polymère pour lesquelles un copolymère statistique ou séquencé de styrène et d'un diène conjugué tel que butadiène ou isoprène est couplé au bitume peuvent être préparées en faisant appel aux procédés décrits dans les citations FR-A-2376188, FR-A-2429241, FR-A-2528439 et EP- A-0360656.

Dans ces procédés, la source de soufre consiste en du soufre chimiquement non lié (FR-A-2376188 et FR-A-2429241), en un polysulfure (FR-A-2528439) ou en un accélérateur de vulcanisation donneur de soufre utilisé seul ou en association avec du soufre chimiquement non lié et/ou un polysulfure ou un accélérateur de vulcanisation non donneur de soufre (EP-A-0360656).

Les compositions bitume/polymère réticulées ainsi obtenues sont connues sous l'acronyme anglais « PmB », pour Polymer-modified Bitumen ou « PmA » pour Polymer-modified Asphalt. La réticulation des compositions bitume/polymère leur confère de très bonnes propriétés en termes de stabilité au stockage, cohésivité, capacité d'allongement et résistance au vieillissement.

Cependant, l'utilisation d'agent réticulant donneur de soufre, en particulier, l'utilisation du soufre élémentaire pour l'étape de réticulation induit une importante émission de sulfure d'hydrogène (hydrogène sulfuré), noté H₂S, lors du procédé de production des PmB. Le sulfure d'hydrogène (H₂S) est un gaz incolore et toxique, présentant une odeur caractéristique à très basse concentration. Dans les unités de production de PmB, la concentration de H₂S relargué au cours de la fabrication d'une composition bitume/polymère réticulée est particulièrement importante. Le dégagement de H₂S est beaucoup plus important pour les compositions bitume/polymère réticulées que pour des bases bitume dépourvues d'agent réticulant. Pour des raisons de sécurité et de contraintes environnementales, la réduction voire la suppression des émissions de sulfure d'hydrogène lors de la production de PmB constitue un enjeu industriel crucial.

Des solutions ont été proposées dans la littérature pour réduire les émissions d'hydrogène sulfuré lors de la fabrication de PmB. En particulier, l'ajout d'un agent apte à piéger le sulfure d'hydrogène (H₂S) lors de la réticulation de compositions bitume/polymère a été proposé pour remédier à cet inconvénient. A titre d'exemple, on peut citer les sels métalliques organiques ou inorganiques décrits dans la demande internationale WO2005065177 comme des agents aptes à piéger le H₂S. Le procédé mis en œuvre pour réduire le dégagement de H₂S consiste à introduire dans un réacteur contenant une composition bitume/polymère préalablement mélangé, un sel métallique organique ou inorganique dissous dans du bitume. Le sel métallique ajouté en masse dans le réacteur, est ensuite agité dans le réacteur durant la réaction de réticulation.
« Plant for modified bitumen production consisting of one skid structure », ELSAMEX Internacional, 2007-11-19 [en ligne - extrait le 2012-08-17], extrait de <www.elsamexinternacional.com/econtent/Library/Images/Polymer.pdf » décrit une installation de production d'une composition de bitume/polymère réticulée.
J. GARCIA, « Sulfa-Check, Hydrogen Sulfide Abatement », Crude Oil Quality Group Conférence, 2005-09-29 [en ligne - extrait le 2012-08-17], extrait de <www.coqa-inc.org/20050929nalco.pdf> divulgue un procédé de traitement du pétrole pour en extraire le sulfure d'hydrogène H₂S au moyen d'un scavenger de sulfure d'hydrogène à base d'amine.
M. NICHOLSON et al., « Hydrogen Sulfide in Petroleum », 2009-06-17 [en ligne - extrait le 2012-08-17], extrait de <www.coqa-inc.org/20010531H2S.pdf> est une publication générale sur le sulfure d'hydrogène H₂S dans les produits pétroliers. Ce document divulgue plusieurs familles de composés utiles comme scavenger de sulfure d'hydrogène.
US 5,277,250 divulgue un dispositif permettant l'injection de produits chimiques dans des pipelines. Ce dispositif est particulièrement adapté à l'industrie pétrolière, notamment pour l'injection de scavenger de sulfure d'hydrogène de type amine.
EP 0 421 683 divulgue l'utilisation, dans un procédé de raffinage pour la préparation de bitume, d'un sel métallique d'un acide organique pour réduire la teneur en sulfure d'hydrogène.

### OBJECT DE L'INVENTION

L'objet de la présente invention est d'améliorer le procédé de production d'une composition bitume/polymère réticulée décrit dans l'art antérieur, notamment en termes de réduction des émissions d'hydrogène sulfuré.

Un autre objet consiste à proposer un procédé de production d'une composition bitume/polymère réticulée, adapté à une production industrielle et répondant aux exigences de sécurité et de contraintes environnementales. En particulier, le but de l'invention est de réduire les émissions de H₂S d'une composition bitume/polymère réticulée à un niveau acceptable en termes de sécurité et de respect de l'environnement, en particulier de réduire le relarguage de H₂S lors du chargement et/ou déchargement d'une telle composition.

Un autre but de l'invention est de proposer une unité de production pour la mise en œuvre d'un tel procédé.

### BREVE DESCRIPTION

Selon l'invention, ce but est atteint par le fait que le procédé de production d'une composition bitume/polymère réticulée comporte les étapes successives suivantes :
(i) préparation d'une composition bitume/polymère réticulée (PmB) dans un réacteur et,
(ii) transfert d'une quantité prédéterminée de ladite composition du réacteur à une cuve de stockage et/ou directement à une station de chargement via une ligne de distribution, ladite composition étant maintenue à une température comprise entre 100°C et 220°C, de préférence entre 120°C et 190°C, plus préférentiellement entre 140°C et 190°C, encore plus préférentiellement entre 160°C et 190°C, lors dudit transfert,
et par le fait qu'une réduction des émissions de sulfure d'hydrogène (H₂S) est réalisée par injection en ligne d'une quantité efficace d'un scavenger de sulfure d'hydrogène (H₂S) lors de l'étape de transfert (ii), ladite injection étant effectuée par introduction continue dudit scavenger de sulfure d'hydrogène (H₂S) dans la ligne de distribution en aval du réacteur et, en amont de la cuve de stockage et de la station de chargement.

En particulier, ce but est atteint par le fait que la ligne de distribution comporte une pompe de transfert apte à générer un écoulement turbulent et par le fait que l'injection en ligne est effectuée en amont de la pompe de transfert.

Selon un mode de réalisation préféré, le rapport massique de scavenger de sulfure d'hydrogène (H₂S) injecté en ligne par rapport à la quantité prédéterminée de la composition bitume/polymère réticulée (PmB) est compris entre 0,05% et 0,4%, de préférence entre 0,1 et 0,35 %, plus préférentiellement entre 0,15% et 0,3%.

Selon un mode de réalisation particulier, le scavenger de sulfure d'hydrogène (H₂S) est choisi parmi les sels métalliques organiques, les sels métalliques inorganiques et leurs mélanges, de préférence, parmi le groupe consistant en les sels métalliques de carboxylates, d'oxydes, de naphténate, de sulfonate et leurs mélanges, plus préférentiellement, parmi les sels métalliques de carboxylates, en particulier, les carboxylates de zinc.

Selon un autre mode de réalisation particulier, le transfert consiste à décharger du réacteur la quantité déterminée de composition bitume/polymère réticulée (PmB) sous forme d'un écoulement canalisé via la ligne de distribution. L'introduction du scavenger de sulfure d'hydrogène (H₂S) est réalisée dès le début dudit écoulement et de façon ininterrompue jusqu'à la fin dudit écoulement.

Selon un développement particulier de l'invention, la préparation de la composition bitume/polymère réticulée (PmB) comporte :
- le mélange dans le réacteur de 90% à 99,7%, de préférence de 94% à 99% en masse d'une base bitume et de 0,7% à 10%, de préférence de 1% à 6% en masse d'un polymère élastomérique, à une température comprise entre 90°C et 220°C, de préférence, entre 140°C et 190°C, jusqu'à obtention d'un mélange bitume/polymère homogène,
- la réticulation dudit mélange bitume/polymère par ajout de 0,05 à 5% en masse d'un agent réticulant donneur de soufre et chauffage à une température de réticulation comprise entre 160°C et 195°C durant au moins 15 minutes, les pourcentages massiques étant calculés par rapport à la masse totale de la composition bitume/polymère réticulée (PmB) ainsi obtenue.

Selon un autre développement de l'invention, l'agent réticulant donneur de soufre est choisi parmi le groupe consistant en du soufre élémentaire, les polysulfures d'hydrocarbyle, les accélérateurs de vulcanisation donneurs de soufre et leurs mélanges.

Selon un autre développement de l'invention, le polymère élastomérique est choisi parmi les copolymères statistiques ou séquencés d'un hydrocarbure monovinyl aromatique et d'un diène conjugué.

Selon un autre développement, le procédé comporte une étape d'introduction d'une quantité efficace d'au moins un additif et/ou au moins un agent fluxant et/ou au moins un diluant dans la composition bitume polymère réticulée (PmB) lors de l'étape de transfert, ladite introduction étant effectuée par injection en ligne dans la ligne de distribution en aval du réacteur et, en amont de la cuve de stockage et de la station de chargement.

Selon l'invention, ce but est également atteint par une unité de production d'une composition bitume/polymère réticulée (PmB) pour la mise en œuvre d'un tel procédé.

L'unité de production selon l'invention comporte :
- un réacteur muni d'un dispositif d'agitation et de moyens de chauffage,
- une cuve de stockage de ladite composition bitume/polymère réticulée (PmB),
- une station de chargement destinée au chargement de ladite composition bitume/polymère réticulées (PmB) dans au moins une citerne d'un moyen de transport et,
- des moyens de transfert de ladite composition (PmB) du réacteur à la station de chargement et/ou à la cuve de stockage. L'unité comporte, en outre, un réservoir destiné à contenir un scavenger de H₂S. Les moyens de transfert comportent une ligne de distribution munie d'une pompe de transfert apte à générer un écoulement turbulent. Le réservoir de scavenger de H₂S est connecté à la ligne de distribution par piquage d'un branchement en amont du réacteur et en aval de la pompe de transfert.

Selon un développement particulier, la pompe de transfert est une pompe de soutirage équipée d'au moins un filtre.

Selon un autre développement particulier, une pompe doseuse est montée sur le branchement en sortie du réservoir avant le piquage sur la ligne de distribution.

### DESCRIPTION DETAILLEE

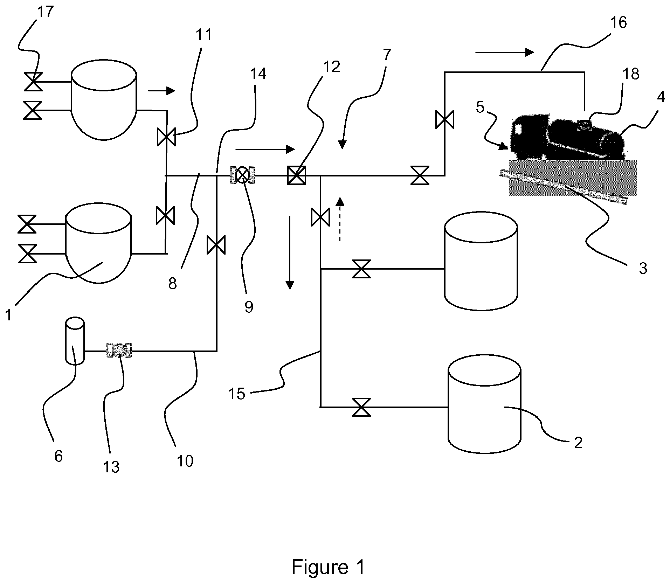

D'autres avantages et caractéristiques ressortiront plus clairement de la description qui va suivre. Les modes particuliers de réalisation de l'invention sont donnés à titre d'exemples non limitatifs et représentés à l'unique dessin annexé dans lequel la figure 1 représente schématiquement une unité de production d'une composition bitume/polymère réticulée selon un mode de réalisation particulier de l'invention.

La présente invention consiste à produire une composition bitume/polymère réticulée (PmB) avec une réduction des émissions de sulfure d'hydrogène (H₂S). En matière d'hygiène, de sécurité et d'environnement, le Ministère du Travail Français impose des normes concernant l'exposition d'un individu à certains composés. En particulier, ce Ministère a défini une valeur limite d'exposition (VLE) et une valeur moyenne d'exposition (VME) pour chacun de ces composés. Concernant l'exposition au sulfure d'hydrogène, également nommé hydrogène sulfuré (H₂S), le Ministère du Travail Français a fixé la VLE à 15mg/m³ soit 10 ppm de H₂S et la VME à 7,5mg/m³ soit 5 ppm de H₂S (valeur calculée sur 8h). Le critère d'acceptabilité des concentrations de H₂S émis lors du chargement et/ou du déchargement de PmB est, en particulier, basé sur ces valeurs de VLE et VME de référence.

Dans la suite de la description, nous utiliserons pour des raisons de clarté l'acronyme PmB et la formule chimique H₂S en référence, respectivement, à une composition bitume/polymère réticulée et au sulfure d'hydrogène.

Dans le cadre des procédés de production de PmB utilisant un agent apte à neutraliser le sulfure d'hydrogène (H₂S), la demanderesse a découvert que le mode d'introduction dudit agent a un effet étonnant sur l'émission de H₂S lors du chargement et/ou déchargement du PmB. Plus particulièrement, il a été découvert que l'introduction dudit agent par injection en ligne permet de réduire de façon importante les émissions de H₂S, comparativement à l'introduction en masse pratiquée selon l'art antérieur.

Selon un mode de réalisation particulier représenté à la figure 1, une unité de production d'une composition bitume/polymère réticulée (PmB) comporte au moins un réacteur 1, une cuve de stockage 2 du PmB, une station de chargement 3 destinée au chargement dudit PmB dans au moins une citerne 4 d'un moyen de transport 5, classiquement, un camion-citerne ou un wagon-citerne.

Le réacteur 1 a une capacité comprise, de préférence, entre 20 et 60 tonnes, plus préférentiellement, entre 25 et 55 tonnes.

La cuve de stockage 2 a une capacité comprise, de préférence, entre 20 et 300 tonnes, plus préférentiellement, entre 100 et 200 tonnes.

La capacité de la citerne 4 d'un camion-citerne 5 est classiquement comprise entre 10 et 40 tonnes, classiquement, d'environ 25 à 26 tonnes.

La station de chargement 3 est équipée d'une passerelle (non représentée) sur laquelle le conducteur doit monter afin d'accéder à la citerne 4. Le PmB est chargé dans la citerne 4 selon tout procédé connu, par exemple, par gravité lorsque la station de chargement 3 est placée près ou sous la cuve de stockage 2 ou, par pompage lorsque la station est éloignée de la cuve de stockage 2.

L'unité de production comporte également un réservoir 6 destiné à contenir un agent apte à neutraliser le sulfure d'hydrogène (H₂S). On entend par agent apte à neutraliser le sulfure d'hydrogène (H₂S), un composé ou un mélange de composés qui en présence de H₂S s'associe avec ce dernier de manière à le capter et/ou le piéger, réduisant ou supprimant ainsi l'émission et/ou le relarguage de H₂S, aux températures de stockage, de transfert et de transport des PmB.

La gamme de température de stockage, de transfert et de transport est déterminée par la nécessité de conserver un produit liquide et pompable. La gamme de température est fixée à environ 110°C au-dessus de la température bille-anneau pour les bitumes modifiés. En outre, il est également préférable de pouvoir livrer des produits ayant une température proche des températures d'utilisation dans leurs applications routières ou industrielles. Les températures de stockage, de transfert et de transport des PmB sont comprises entre 100°C et 220°C, de préférence entre 120°C et 190°C, plus préférentiellement entre 140°C et 190°C, encore plus préférentiellement entre 160°C et 190°C.
Pour des raisons de simplification, le terme anglo-saxon « scavenger » sera utilisé dans la suite de la description pour nommer l'agent apte à neutraliser le H₂S.

L'utilisation d'un scavenger de H₂S permet de réduire significativement, ou avantageusement de supprimer, le dégagement de H₂S lors du chargement et/ou du déchargement d'une composition bitume/polymère réticulée dans les camions-citernes 5. Le réservoir 6 a une capacité suffisante pour fournir au moins la quantité efficace de scavenger pour réduire ou supprimer le H₂S. La quantité efficace de scavenger de H₂S est, classiquement, comprise entre 20 et 210 kg, de préférence, entre 50 et 165 kg.

Selon un mode de réalisation préférentiel, le scavenger de H₂S est choisi parmi les sels métalliques organiques, les sels métalliques inorganiques et leurs mélanges. En effet, les sels métalliques organiques et inorganiques se sont révélés être des scavengers de H₂S particulièrement efficaces pour réduire les émissions de H₂S lors de la production de PmB, notamment dans la cadre d'un procédé de production mettant en œuvre une introduction dudit scavanger par injection en ligne.

Les scavengers de H₂S préférés sont des sels métalliques organiques et des sels métalliques inorganiques de fer ou de zinc, de préférence de zinc. Le scavenger de H₂S est, de préférence, choisi parmi le groupe consistant en les sels métalliques de carboxylates, d'oxydes, de naphténates, de sulfonates et leurs mélanges. A titre d'exemple, on peut citer le stéarate de zinc, l'octanoate de zinc, l'octoate de zinc (bis(2-éthylhexanoate) de zinc), l'oxyde de zinc, le sulfonate de zinc, le naphténate de fer et leurs mélanges. Le scavenger de H₂S est, plus préférentiellement, choisi parmi les sels métalliques de carboxylates, avantageusement, les carboxylates de zinc.

En fonction de l'importance de la production de PmB, l'unité de production peut comporter plusieurs réacteurs 1, cuves de stockage 2 et/ou stations de chargement 3.

Une composition bitume/polymère réticulée (PmB) est initialement préparée, selon tout procédé connu, dans le réacteur 1 muni d'un dispositif d'agitation et de moyens de chauffage (non représentés).

Des moyens de transfert 7 permettent de décharger une quantité déterminée de composition bitume/polymère réticulée (PmB) du réacteur 1, sous forme d'un écoulement de PmB maintenu à une température comprise entre 100°C et 220°C, de préférence entre 120°C et 190°C, plus préférentiellement entre 140°C et 190°C, encore plus préférentiellement entre 160°C et 190°C.

L'écoulement de PmB est canalisé par les moyens de transfert 7 pour transférer la quantité prédéterminée de PmB du récateur 1 à une cuve de stockage 2 et/ou directement à la station de chargement 3.

Les moyens de transfert 7 comportent au moins une ligne de distribution 8 munie d'une pompe de transfert 9 apte à générer un écoulement turbulent. On entend par écoulement turbulent, un écoulement dont les vecteurs des vitesses instantanées sont inégaux (différents en direction, sens, intensité) formant ainsi des tourbillons. Généralement, l'écoulement turbulent à l'instar de l'écoulement laminaire où tous les vecteurs sont parallèles induit une augmentation de la viscosité du fluide.

La pompe de transfert 9 est, avantageusement, une pompe de soutirage équipée d'au moins un filtre.

La ligne de distribution 8 est agencée de manière à permettre le transfert du PmB à la station de chargement 3 et/ou la cuve de stockage 2. La ligne de distribution 8 est également utilisée pour décharger une quantité déterminée de PmB de la cuve de stockage 2 vers la station de chargement 3. Dans ce cas, l'écoulement de PmB est représenté par la flèche en pointillé à la figure 1.

La quantité déterminée de PmB correspond à la quantité de PmB à transférer et dépendra notamment de la contenance de la citerne 4 et/ou de la cuve de stockage 2.

Le réservoir 6 de scavenger de H₂S est connecté à la ligne de distribution 8 par piquage d'un branchement 10 en amont du réacteur 1 et en aval de la pompe de transfert 9. Les termes amont et aval sont définis par rapport au sens d'écoulement du PmB représenté par les flèches pleines à la figure 1.

La ligne de distribution 8 peut, avantageusement, comporter une ou plusieurs vannes et/ou échangeurs thermiques permettant de réguler l'écoulement du PmB.

Une pompe doseuse 13 est, de préférence, montée sur le branchement 10 en sortie du réservoir 6 avant le piquage sur la ligne de distribution 8 pour permettre de réguler l'introduction du scavenger de H₂S en ligne.

Comme représenté à la figure 1, la ligne de distribution 8 peut être équipée d'une ou de plusieurs électrovannes 11 et/ou d'un ou de plusieurs échangeurs thermiques 12 pouvant être actionnées individuellement.

La ligne de distribution 8 présente une jonction 14 séparant la ligne de distribution 8 en un premier branchement 15 permettant de relier le réacteur 1 à au moins une cuve de stockage 2 et un second branchement 16 permettant de relier le réacteur 1 à la station de chargement 3. La pompe de transfert 9 est située sur la ligne de distribution 8 en amont de la jonction 14.

L'unité de production comporte, de préférence, un dispositif de contrôle du débit d'écoulement et de température du PmB et du scavenger de H₂S. Le dispositif de contrôle comporte, en particulier, un système mécanique et/ou électronique apte à actionner les vannes 11, les échangeurs thermiques 12 et/ou la pompe doseur 13. Le dispositif de contrôle permet ainsi de programmer les conditions du transfert du PmB du réacteur 1 vers la cuve de stockage 2 et/ou du réacteur 1 vers la station de chargement 3 et/ou de la cuve de stockage 2 vers la station de chargement 3. En outre, le dispositif de contrôle permet, notamment, d'appliquer des consignes spécifiques en température et en quantité de scavenger H₂S à injecter en ligne selon la quantité prédéterminée de PmB à transférer, la nature du scavenger de H₂S et du PmB.

Selon un mode de réalisation préféré, la préparation du PmB comporte le mélange dans le réacteur 1 d'une base bitume et d'un polymère élastomérique à une température comprise entre 90°C et 220°C, de préférence entre 140°C et 190°C, plus préférentiellement entre 170°C et 190°C.

La base bitume utilisée dans le procédé de l'invention comporte un ou plusieurs bitumes issus de différentes origines. On peut citer tout d'abord les bitumes d'origine naturelle, ceux contenus dans des gisements de bitume naturel, d'asphalte naturel ou les sables bitumineux.

Les bitumes peuvent être un bitume provenant du raffinage du pétrole brut. Les bitumes proviennent de la distillation atmosphérique et/ou sous vide du pétrole. Ces bitumes pouvent être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique. Les bitumes utilisés peuvent également être des bitumes fluxés par addition de solvants volatils, de fluxants d'origine pétrolière, de fluxants carbochimiques et/ou de fluxants d'origine végétale.

Les bitumes sont, avantageusement, choisis parmi les bitumes routiers de classes 10/20 à 160/220 et les bitumes spéciaux de toutes classes.

Les proportions préférées de la base bitume présente dans le mélange bitume/polymère représentent entre 90% et 99,3% en masse, de préférence, entre 94% et 99% en masse. Les pourcentages massiques sont calculés par rapport à la masse totale du mélange polymère/bitume.

Les polymères élastomériques utilisables dans le procédé selon l'invention sont les polymères pouvant être réticulés de manière à former un réseau améliorant les propriétés rhéologiques du mélange bitume/polymère. On peut citer, à titre d'exemple, les polybutadiènes, les polyisoprènes, les caoutchoucs butyle, les polyacrylates, les polyméthacrylates, les polychloroprènes, les polynorbornènes, les polybutènes, les polyisobutènes, les polyoléfines telles que les polyéthylènes ou les polyéthylènes haute densité, les polypropylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment le terpolymère éthylène/acrylate de méthyle/méthacrylate de glycidyle et les terpolymères éthylène /acrylate ou méthacrylate d'alkyle/anhydride maléique et notamment le terpolymère éthylène/acrylate de butyle/anhydride maléique. Les polymères peuvent également être les polymères décrits dans les brevets EP-A-1572807, EP-A-0837909 et EP-A-1576058 de la société demanderesse.

Le polymère élastomérique est, avantageusement, choisi parmi les copolymères statistiques ou séquencés de styrène et d'un diène conjugué tel que butadiène, isoprène, chloroprène, butadiène carboxylé, isoprène carboxylé, et plus particulièrement, consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore, de styrène et d'isoprène carboxylé.

Le copolymère de styrène et de diène conjugué, et en particulier chacun des copolymères précités, possède avantageusement une teneur pondérale en styrène allant de 5 % à 50 % par rapport au copolymère. La masse moléculaire moyenne en poids du copolymère de styrène et de diène conjugué, et notamment celle des copolymères mentionnés ci-dessus, peut être comprise, par exemple, entre 10 000 et 600 000 daltons et se situe, de préférence, entre 30 000 et 400 000 daltons.

Un polymère préféré est un copolymère à base de motifs butadiène et de motifs styrène tel que le copolymère bloc styrène/butadiène SB ou le copolymère bloc styrène/butadiène/styrène SBS.

Les proportions préférées du polymère élastomérique présent dans le mélange bitume/polymère représentent entre 0,7% et 10% en masse, de préférence, entre 1 et 6% en masse. Les pourcentages massiques sont calculés par rapport à la masse totale du mélange polymère/bitume.

Le mélange bitume/polymère ainsi formé est maintenu à cette température sous agitation jusqu'à l'obtention d'un mélange bitume/polymère homogène. La durée de cette étape dépend de plusieurs facteurs, notamment, de la masse moléculaire du polymère élastomérique à dissoudre dans la base bitume et de la composition chimique initiale de la base bitume.

Un agent réticulant donneur de soufre est ensuite ajouté au mélange bitume/polymère et provoque la réticulation du polymère élastomérique au sein de la matrice bitume.

La réticulation du mélange bitume/polymère est réalisée sous agitation, par chauffage à une température de réticulation comprise entre 160 et 195°C durant au moins 15 minutes.

La quantité d'agent réticulant donneur de soufre est, de préférence, comprise entre 0,05% à 5% en masse, plus préférentiellement, entre 0,05 et 0,5% en masse. Les pourcentages massiques sont calculés par rapport à la masse totale de la composition bitume/polymère réticulée (PmB).

L'agent réticulant donneur de soufre est, avantageusement, choisi parmi le groupe consistant en du soufre élémentaire, les polysulfures d'hydrocarbyle, les accélérateurs de vulcanisation donneurs de soufre et leurs mélanges.

Le soufre élémentaire susceptible d'être utilisé pour constituer, en partie ou en totalité, l'agent réticulant est avantageusement du soufre en fleur et, de préférence, du soufre cristallisé sous la forme orthorhombique et connu sous le nom de soufre alpha.

Les polysulfures d'hydrocarbyle susceptibles d'être employés pour former une partie ou la totalité de l'agent réticulant peuvent être choisis parmi ceux qui sont définis dans la demande de brevet FR-A-2528439.

Les accélérateurs de vulcanisation donneurs de soufre peuvent être choisis parmi le mercaptobenzothiazole (MBT), les thiurams, les polysulfures de thiuram, les disulfures d'alkylphénols, les disulfures, les dithiocarbamates et leurs dérivés. Pour plus de détails sur les accélérateurs de vulcanisation utilisables comme ou dans la constitution de l'agent réticulant, on peut se référer, à titre d'exemple, aux citations EP-A-0360656, EP-A-0409683 et EP-A-0582703 dont le contenu est incorporé à la présente description par référence, de même que le contenu de la citation FR-A-2528439.

Pour cette étape de préparation du PmB, la base bitume, le polymère et l'agent réticulant sont introduits successivement ou simultanément dans le réacteur 1 par une ou plusieurs entrées 17 situées en amont du réacteur 1.

Le PmB ainsi préparé peut ensuite être transféré du réacteur 1 à une cuve de stockage 2 et/ou directement à une station de chargement 3 via la ligne de distribution 8. Le transfert est destiné à remplir une ou plusieurs cuves de stockage 2 et/ou un ou plusieurs camions-citernes 5. Le chargement du PmB dans un camion-citerne 5 se fait classiquement par le dôme 18 de la citerne 4.

Lors du transfert, le PmB est maintenu à une température comprise entre 100°C et 220°C, de préférence entre 120°C et 190°C, plus préférentiellement entre 140°C et 190°C, encore plus préférentiellement entre 160°C et 190°C.

La réduction des émissions de sulfure d'hydrogène (H₂S) est réalisée par injection en ligne d'une quantité efficace d'un scavenger de H₂S, lors de l'étape de transfert d'une quantité prédéterminée de la composition bitume/polymère réticulée (PmB).

L'injection en ligne est effectuée par introduction continue dudit scavenger de H₂S dans la ligne de distribution 8 en aval du réacteur 1 et, en amont de la cuve de stockage 2 et de la station de chargement 3.

En outre, l'injection en ligne est avantageusement effectuée en amont de la pompe de transfert 9 de manière à introduire le scavenger de H₂S sous un régime turbulent et améliorer sa réactivité.

L'introduction du scavenger de H₂S est réalisée, avantageusement, dès le début de l'écoulement et de façon ininterrompue jusqu'à la fin de l'écoulement. Pour ce faire, la pompe doseuse 13 est actionnée puis arrêtée en même temps que la pompe de transfert 9, respectivement, en début et en fin de transfert. Le scavenger de H₂S est, de préférence, introduit dans la ligne de distribution 8 via le branchement 10 avant la pompe de transfert 9 pour favoriser le brassage du scavenger de H₂S dans le PmB.

Afin de garantir le traitement continu de l'H₂S sur la totalité de l'écoulement, la pompe doseuse 13 est actionnée, de préférence, légèrement avant la pompe de transfert 9 en début de transfert puis arrêtée légèrement après la pompe de transfert 9 en fin de traitement.

La quantité de scavenger de H₂S à injecter en ligne est calculée au préalable en fonction de la quantité de la composition bitume/polymère réticulée (PmB) à décharger du réacteur 1 vers la cuve de stockage 2 et/ou la station de chargement 3. Un schéma de supervision des transferts de PmB vers la ou les cuves de stockage 2 et/ou vers la ou les stations de chargement 3 peut être élaboré selon tout procédé connu. Le schéma de supervision des transferts de PmB détermine, en particulier, le débit de scavenger de H₂S injecté en ligne en fonction de plusieurs paramètres, notamment, la quantité de PmB transféré, l'efficacité de scavenger de H₂S et la température de l'écoulement de PmB issu du réacteur 1. La température de l'écoulement de PmB a notamment une influence importante sur la quantité de H₂S émise, une température plus élevée donnant une plus forte émission de H₂S.

Le rapport massique de scavenger de H₂S injecté en ligne par rapport à la quantité prédéterminée de composition bitume/polymère réticulée (PmB) est, avantageusement, compris entre 0,10% et 0,35%, de préférence entre 0,2 et 0,3%.

Selon un autre mode de réalisation particulier, le procédé de production d'une composition bitume/polymère réticulée (PmB) comporte avantageusement une étape d'introduction d'une quantité efficace d'au moins un additif et/ou au moins un agent fluxant et/ou au moins un diluant dans la composition bitume polymère réticulée (PmB) lors de l'étape de transfert. L'additif et/ou l'agent fluxant et/ou le diluant peut être introduit séparément ou simultanément par un piquage indépendant sur la ligne de distribution 8. Comme pour le scavenger de H₂S, l'introduction est effectuée par injection en ligne dans la ligne de distribution 8 en aval du réacteur 1 et, en amont de la cuve de stockage 2 et de la station de chargement 3. L'injection en ligne de l'additif et/ou l'agent fluxant et/ou le diluant est, avantageusement, effectuée en amont de la pompe de transfert 9.

L'unité de production comporte, par exemple, un piquage supplémentaire constitué par un montage réservoir/pompe/branchement identique à celui de l'injection en ligne de scavenger de H₂S (réservoir 6/pompe doseuse 13/branchement 10).

Alternativement, le même montage réservoir 6/pompe doseuse 13/branchement 10 utilisé pour introduire le scavenger de H₂S peut également servir à introduire en ligne l'additif et/ou l'agent fluxant et/ou le diluant séparément ou en mélange. Un mélange d'additif, d'agent fluxant, de diluant et/ou de scavenger de H₂S peut être introduit en même temps à la condition que chacun des constituants dudit mélange soit inerte vis-à-vis des autres constituants du mélange. Le mélange de l'additif, de l'agent fluxant, du diluant et/ou du scavenger de H₂S peut être réalisé selon tout procédé connu, par exemple, par simple ajout des constituants du mélange dans l'unique réservoir 6.

La quantité d'additif et/ou d'agent fluxant et/ou de diluant injectée en ligne dépend de l'usage final du PmB sur le chantier et peut varier entre 0,1% et 40%, plus particulièrement entre 0,1 % et 30% massique par rapport au PmB.

Les additifs sélectionnés sont ceux couramment employés pour réduire les températures de mise en œuvre et de compactage des enrobés et des asphaltes formulés à partir de ces PmB. L'injection en ligne de ces additifs permet avantageusement de réduire le rejet des gaz de combustion, d'émissions de fumées et de H₂S.

L'additif est, de préférence, choisi parmi le groupe constitué par les résines naturelles d'origine végétale, les composés résineux à base de Tall Oil sous ses différentes formes (brut, acide gras, acide résinique ou brai), les cires de type Fischer-Tropsch, les cires d'esters d'acide gras d'origine synthétique, végétale ou fossile et leurs mélanges. Pour plus de détails sur les composés résineux à base de Tall Oil utilisables comme additif, on peut se référer, à titre d'exemple, à la demande WO2010/134024 dont le contenu est incorporé à la présente description par référence.

L'additif peut également être sélectionné pour améliorer les propriétés mécaniques, élastiques ou rhéologiques du PmB ou pour faciliter la mise en œuvre du PmB. L'additif est, avantageusement, choisi parmi le groupe constitué par les composés organogélateurs, les polyamines, les acides phosphoriques, les acides polyphosphoriques, les polyoléfines éventuellement substituées par un groupement époxy ou acide carboxylique, les dérivés d'anhydride succinique et leurs mélanges, par exemple le produit de réaction du polyisobutylène d'anhydride succinique et d'une polyamine. A titre d'exemple de composés organogélateurs, on peut se référer à la demande WO2008/107551 dont le contenu est incorporé à la présente description par référence. Pour plus de détails sur les dérivés d'anhydride succinique utilisables comme additif, on peut se référer, à titre d'exemple, aux citations FR-A-201057845 et PCT/IB2011/054241 dont le contenu est incorporé à la présente description par référence.

L'agent fluxant est, de préférence, choisi parmi les huiles hydrocarbonées présentant un intervalle de distillation à pression atmosphérique déterminé selon la norme ASTM D 86-67, compris entre 100 et 450° C et situé plus spécialement entre 150 et 400° C. Cette huile hydrocarbonée qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique ou une huile de houille. Cette huile hydrocarbonée est suffisamment "lourde" pour limiter l'évaporation au moment de son addition au PmB et en même temps suffisamment "légère" pour être éliminée au maximum après répandage du PmB le contenant, de manière à retrouver les mêmes propriétés mécaniques qu'aurait présenté, après répandage à chaud, le PmB préparé sans utiliser d'agent fluxant.

On peut également utiliser un fluxant végétal ou un mélange d'au moins un fluxant végétal avec au moins une huile hydrocarbonée pétrolière. A titre d'exemple, on peut citer la demande WO2008/077888 dont le contenu est incorporé à la présente description par référence.

Le diluant peut être un bitume ou un mélange de bitumes tel que décrit précédemment. Dans ce dernier cas, le PmB préparé dans le réacteur 1 est un PmB concentré destiné à être dilué.

Les compositions bitume/polymère réticulées (PmB) directement obtenues par le procédé de production selon l'invention ont des propriétés remarquables en termes de stabilité au stockage, cohésivité, capacité d'allongement et résistance au vieillissement, tout en garantissant une émission et un relarguage en H₂S réduits répondant aux exigences administratives de sécurité. Les compositions obtenues par le procédé selon l'invention sont des candidates particulièrement appropriées pour la fabrication de liants bitumineux, pouvant être mis en œuvre tel quel, sous forme anhydre, sous forme d'émulsion ou sous forme de bitumes fluxés. Ces liants bitumineux peuvent ensuite être associés en mélange avec des granulats pour fabriquer un enduit superficiel, un enrobé à chaud, un enrobé à froid, un enrobé coulé à froid, une grave émulsion. Les compositions obtenues par le procédé selon l'invention peuvent être utilisées dans des applications routières et/ou industrielles, pour fabriquer une couche de roulement, un revêtement d'étanchéité, une membrane ou une couche d'imprégnation.

### EXEMPLES

### Procédé de production d'une composition bitume/polymère réticulée selon l'art antérieur T₁ (témoin)

On prépare une composition bitume/polymère réticulée témoin T₁ selon un procédé de production dans lequel le scavenger de H₂S est introduit en masse dans un réacteur 1 équipé d'un dispositif d'agitation et de moyens de chauffage avant l'étape de transfert.

Le procédé de production comporte une première étape de préparation de 52 tonnes d'une composition bitume/polymère réticulée de classe 25/55-60 (selon la norme EN 14023) dans un réacteur ayant une contenance d'environ 52 tonnes.

### - Première étape : préparation d'une composition bitume/polymère réticulée

On introduit dans le réacteur :
- 95% en masse d'un bitume de distillation directe de pénétrabilité 40 1/10 mm selon la norme NF EN 1426:
- 5% en masse d'un copolymère séquencé styrène/butadiène, à 25% en poids de styrène et à 75% en poids de butadiène ayant une masse moléculaire en poids, Mw de 128 000 Daltons.

Le mélange est agité à haute intensité c'est-à-dire à fort taux de cisaillement pour obtenir un mélange homogène à l'échelle du micron et chauffé à 185°C pendant environ 4 heures.

On ajoute ensuite 0,13 % en masse de soufre (soufre en fleur).

Le mélange est agité à faible intensité et chauffé à 190°C pendant 45 min.

### - Seconde étape : traitement des émissions de H₂S et opération de transfert

Le seconde étape consiste à ajouter 2000 ppm d'octoate de zinc contenant 23% de zinc (scavenger). L'octoate de zinc liquide est introduit en masse dans le réacteur 1 puis le mélange est agité en maintenant la température à 190°C durant 4 heures. Le pourcentage de scavenger est calculé par rapport aux 52 tonnes de la composition bitume/polymère réticulée issue de la première étape.

Les quantités utilisées sont les suivantes : 49.3324 tonnes de bitume, 2.6 tonnes de copolymère séquencé styrène/butadiène, 0.0676 tonnes de soufre et 120 litres soit environ 2000 ppm de scavenger.

Les 52 tonnes de compositions bitume/polymère réticulées ainsi traitées par le scavenger sont directement transférées vers la station de chargement 3, pour charger deux camions-citernes 5 ayant une contenance de 26 m³ par porteur. Le chargement dans le camion-citerne 5 se fait classiquement par le dôme 18 de la citerne 4 grâce à un bras de chargement (non représenté). La durée du chargement est d'environ 30 min.

### Procédé de production de compositions bitume/polymère réticulées C₁ et C₂ selon l'invention

On prépare deux compositions bitume/polymère réticulées selon l'invention C₁ et C₂ selon un procédé de production dans lequel le scavenger de H₂S est injecté en ligne dans la ligne de distribution en aval du réacteur 1 et en amont de la pompe de transfert 9.

Les compositions bitume/polymère réticulées selon l'invention C₁ et C₂ sont préparées selon un procédé identique à la composition témoin T₁ à l'exception de la seconde étape, des valeurs du pourcentage de scavenger de H₂S et, spécifiquement pour la composition C₂, de la nature du bitume utilisé.

### - Seconde étape : traitement des émissions de H₂S et opération de transfert

La seconde étape consiste à ajouter le scavenger par injection en ligne dudit scavenger en aval du réacteur 1 c'est-à-dire au niveau de la sortie du réacteur 1 par l'intermédiaire d'une pompe doseuse 13 et en amont de la pompe de transfert 9. Le scavenger stocké dans un réservoir 6 est injecté par l'intermédiaire d'une canne d'injection biseautée. La pompe doseuse 13 est programmée en fonction du débit de l'écoulement de la composition bitume/polymère réticulée issue de la première étape, pour injecter de façon continue dans l'écoulement de PmB une quantité appropriée de scavenger. La température de la composition bitume/polymère réticulée dans la ligne de distribution en sortie de réacteur 1 est d'environ 177°C.

### Exemple 1 :

- première étape : préparation d'une composition bitume/polymère réticulée de classe 25/55-60 (selon la norme EN 14023) à partir d'un bitume de distillation directe de pénétrabilité 40 1/10 mm selon la norme NF EN 1426,
- seconde étape : traitement de l'émission de H2S par injection en ligne de 2900ppm d'octoate de zinc (scavenger).

### Exemple 2 :

- première étape : préparation d'une composition bitume/polymère réticulée de classe 25/25-65 (selon la norme EN 14023) à partir d'un bitume de distillation directe de pénétrabilité 60 1/10 mm selon la norme NF EN 1426,
- seconde étape : traitement de l'émission de H2S par injection en ligne de 2500ppm d'octoate de zinc (scavenger).

Comme pour T1, les compositions bitume/polymère réticulées C₁ et C₂ sont directement transférées vers la station de chargement 3, pour charger deux camions-citernes 5 ayant une contenance de 26 m³ par porteur.

### Mesure des émissions de H₂S

Pour chaque composition bitume/polymère réticulée T₁, C₁ et C₂ contenue dans un camion-citerne 5, des prélèvements dans la phase liquide et dans la phase gazeuse (ciel de la citerne 4) ont été effectués lors du chargement puis du déchargement (dépotage) du PmB après avoir parcouru environ 200 km, avec un trajet essentiellement autoroutier.

Pour les prélèvements dans la phase liquide, les échantillons ont donc été prélevés à la température du bitume chargé, soit proche de 170°C et à la température du bitume déchargé supérieure à 160°C. Les échantillons ont été analysés par barbotage d'azote dans la composition bitume/polymère réticulée (PmB) suivi par une mesure du taux de H₂S piégé dans l'azote au moyen d'un détecteur gazeux de type tube Draëger.

Pour la phase gazeuse, une méthode rapide de dosimétrie colorimétrique utilisant une pompe de prélèvement et des tubes colorimétriques de type Gastec, commercialisés par la société GASTEC. Les prélèvements ont été effectués à environ 50 cm dans le ciel gazeux de la citerne 4 du camion-citerne 5.

Les résultats sont répertoriés dans le tableau I ci-dessous et correspondent, pour chaque composition T₁, C₁ et C₂, aux valeurs moyennes obtenues pour les prélèvements deux camions-citernes 5.

**Tableau I**

| Référence | Chargement | | Déchargement | |
|---|---|---|---|---|
| | H₂S phase liquide (ppm) | H₂S phase gazeuse (ppm)* | H₂S phase liquide (ppm) | H₂S phase gazeuse (ppm)* |
| T₁ | 73 | 380 | 81 | 1500 |
| C₁ | <10 | 37 | <<10 | <2 |
| C₂ | <1 | <1 | <1 | 1.5 |

| | | | | |
|---|---|---|---|---|
| * prélèvement effectué à la fin du chargement ou avant dépotage | | | | |

Les résultats montrent que les émissions de H₂S sont efficacement réduites par le procédé de production selon l'invention. En effet, comparativement à la composition témoin T₁, les compositions C₁ et C₂ émettent nettement moins de H₂S. En particulier, les émissions de H₂S pour C₁ et C₂ sont inférieures à 10 ppm en phase liquide. La composition C₂ est particulièrement peu émettrice de H₂S avec une émission en phase gazeuse et liquide inférieure à 5 ppm, que ce soit au chargement ou au déchargement du camion-citerne 5.

La présente invention n'est pas limitée aux exemples décrits. En particulier, la préparation du PmB peut être réalisée au moyen de plusieurs réacteurs agencés selon tout procédé connu pour permettre la circulation des produits contenus dans lesdits réacteurs à n'importe quelle étape de la préparation du PmB. Un des réacteurs peut, par exemple, servir de bac de maturation. L'unité de production peut, avantageusement, comporter deux réacteurs reliés entre eux par une canalisation dotée d'un mélangeur, par exemple un moulin colloïdal de type Siefer et agencés selon tout procédé connu de manière à permettre d'homogénéiser les compositions bitume/polymère et bitume/polymère réticulée par passage à travers ledit mélangeur au cours de l'étape de préparation du PmB.

Le procédé de production selon l'invention ainsi que l'unité de production pour la mise en œuvre d'un tel procédé sont remarquables en ce qu'ils permettent de répondre aux exigences de sécurité et d'environnement en matière de régulation des émissions de H₂S. En particulier, le procédé de production de PmB permet d'atteindre avantageusement une concentration en H₂S inférieure ou égale à 10 ppm, de préférence, inférieure ou égale à 5 ppm.

Le procédé de production ainsi que l'unité de production selon l'invention permettent de diminuer fortement les risques d'exposition des opérateurs à l'H₂S lors du chargement et/ou déchargement de compositions bitume/polymère réticulées dans les camions ou wagons-citernes.

## Revendications

1. Procédé de production d'une composition bitume/polymère réticulée avec réduction des émissions de sulfure d'hydrogène comportant les étapes successives suivantes :
(i) préparation d'une composition bitume/polymère réticulée (PmB) dans un réacteur (1) et,
(ii) transfert d'une quantité prédéterminée de ladite composition du réacteur (1) à une cuve de stockage (2) et/ou directement à une station de chargement (3) via une ligne de distribution (8), ladite composition (PmB) étant maintenue à une température comprise entre 100°C et 220°C lors dudit transfert, une réduction des émissions de sulfure d'hydrogène (H₂S) étant réalisée par injection en ligne d'une quantité efficace d'un scavenger de sulfure d'hydrogène (H₂S) lors de l'étape de transfert (ii), ladite injection étant effectuée par introduction continue dudit scavenger de sulfure d'hydrogène (H₂S) dans la ligne de distribution (8) en aval du réacteur (1) et, en amont de la cuve de stockage (2) et de la station de chargement (3).

2. Procédé selon la revendication 1, **caractérisé en ce que** la ligne de distribution (8) comporte une pompe de transfert (9) apte à générer un écoulement turbulent et **en ce que** l'injection en ligne est effectuée en amont de la pompe de transfert (9).

3. Procédé selon l'une des revendications 1 et 2, **caractérisé en ce que** le scavenger de sulfure d'hydrogène (H₂S) est choisi parmi les sels métalliques organiques, les sels métalliques inorganiques et leurs mélanges.

4. Procédé selon l'une quelconque des revendications 1 à 3, **caractérisé en ce que** le scavenger de sulfure d'hydrogène (H₂S) est choisi parmi le groupe consistant en les sels métalliques de carboxylates, d'oxydes, de naphténates, de sulfonates et leurs mélanges, de préférence, parmi les sels métalliques de carboxylates.

5. Procédé selon l'une quelconque des revendications 1 à 4, **caractérisé en ce que** la température de la composition bitume/polymère réticulée (PmB) lors du transfert est comprise entre 140°C et 190°C.

6. Procédé selon l'une quelconque des revendications 1 à 5, **caractérisé en ce que** le transfert consiste à décharger du réacteur (1) la quantité déterminée de composition bitume/polymère réticulée (PmB) sous forme d'un écoulement canalisé via la ligne de distribution (8) et **en ce que** l'introduction du scavenger de sulfure d'hydrogène (H₂S) est réalisée dès le début dudit écoulement et de façon ininterrompue jusqu'à la fin dudit écoulement.

7. Procédé selon l'une quelconque des revendications 1 à 6, **caractérisé en ce que** le rapport massique de scavenger de sulfure d'hydrogène (H₂S) injecté en ligne par rapport à la quantité prédéterminée de composition bitume/polymère réticulée (PmB) est compris entre 0,10% et 0,35%, de préférence, entre 0,2 et 0,3 %.

8. Procédé selon l'une quelconque des revendications 1 à 7, **caractérisé en ce que** la préparation de la composition bitume/polymère réticulée (PmB) comporte :
- le mélange dans le réacteur (1) de 90% à 99,7%, de préférence de 94% à 99% en masse d'une base bitume et de 0,7% à 10%, de préférence de 1% à 6% en masse d'un polymère élastomérique, à une température comprise entre 90°C et 220°C, de préférence, entre 140°C et 190°C jusqu'à obtention d'un mélange bitume/polymère homogène,
- la réticulation dudit mélange bitume/polymère par ajout de 0,05 à 5% en masse d'un agent réticulant donneur de soufre et chauffage à une température de réticulation comprise entre 160 et 195°C durant au moins 15 minutes, les pourcentages massiques étant calculés par rapport à la masse totale de la composition bitume/polymère réticulée (PmB).

9. Procédé selon la revendication 8, **caractérisé en ce que** l'agent réticulant donneur de soufre est choisi parmi le groupe consistant en du soufre élémentaire, les polysulfures d'hydrocarbyle, les accélérateurs de vulcanisation donneurs de soufre et leurs mélanges.

10. Procédé selon l'une des revendications 8 et 9, **caractérisé en ce que** le polymère élastomérique est choisi parmi les copolymères statistiques ou séquencés d'un hydrocarbure monovinyl aromatique et d'un diène conjugué.

11. Procédé selon l'une quelconque des revendications 8 à 10, **caractérisé en ce que** la quantité d'agent réticulant donneur de soufre est comprise entre 0,05 et 0,5% en masse par rapport à la masse totale de la composition bitume/polymère réticulée (PmB).

12. Procédé selon l'une quelconque des revendications 1 à 11, **caractérisé en ce qu'**il comporte une étape d'introduction d'une quantité efficace d'au moins un additif et/ou au moins un agent fluxant et/ou au moins un diluant dans la composition bitume polymère réticulée (PmB) lors de l'étape de transfert et **en ce que** ladite introduction est effectuée par injection en ligne dans la ligne de distribution (8) en aval du réacteur (1) et, en amont de la cuve de stockage (2) et de la station de chargement (3).

13. Unité de production d'une composition bitume/polymère réticulée (PmB) pour la mise en œuvre d'un procédé selon l'une quelconque des revendications 1 à 12, comportant :
- un réacteur (1) muni d'un dispositif d'agitation et de moyens de chauffage,
- une cuve de stockage (2) de ladite composition bitume/polymère réticulée (PmB),
- une station de chargement (3) destinée au chargement de ladite composition bitume/polymère réticulées (PmB) dans au moins une citerne (4) d'un moyen de transport (5) et,
- des moyens de transfert (7) de ladite composition (PmB) du réacteur (1) à la station de chargement (3) et/ou à la cuve de stockage (2),
**caractérisée en ce qu'**elle comporte un réservoir (6) destiné à contenir un scavenger de H₂S et **en ce que** les moyens de transfert (7) comportent une ligne de distribution (8) munie d'une pompe de transfert (9) apte à générer un écoulement turbulent et **en ce que** le réservoir (6) de scavenger de H₂S est connecté à la ligne de distribution (8) par piquage d'un branchement (10) en amont du réacteur (1) et en aval de la pompe de transfert (9).

14. Unité de production selon la revendication 13, **caractérisée en ce que** la pompe de transfert (9) est une pompe de soutirage équipée d'au moins un filtre.

15. Unité de production selon l'une des revendications 13 et 14, **caractérisée en ce qu'**une pompe doseuse (13) est montée sur le branchement (10) en sortie du réservoir (6) avant le piquage sur la ligne de distribution (8).

## Patentansprüche

1. Verfahren zur Herstellung einer vernetzten Bitumen/Polymer-Zusammensetzung mit reduzierter Emission von Schwefelwasserstoff, das folgende aufeinanderfolgende Schritte umfasst:
(i) Herstellen einer vernetzten Bitumen/Polymer-Zusammensetzung (PmB) in einem Reaktor (1) und
(ii) Überführen einer vorgegebenen Menge der Zusammensetzung des Reaktors (1) in einen Lagerbehälter (2) und/oder direkt in eine Befüllstation (3) über eine Verteilerleitung (8), wobei die Zusammensetzung (PmB) beim Überführen bei einer Temperatur zwischen 100°C und 220°C gehalten wird, wobei eine Reduzierung der Emission von Schwefelwasserstoff (H₂S) durch in der Leitung erfolgendes Einspritzen einer wirksamen Menge eines Schwefelwasserstofffängers (H₂S-Fängers) während des Schritts zum Überführen (ii) erreicht wird, wobei das Einleiten durch kontinuierliches Einleiten des Schwefelwasserstofffängers (H₂S-Fängers) in die Verteilerleitung (8) in Strömungsrichtung hinter dem Reaktor (1) und in Strömungsrichtung vor dem Lagerbehälter (2) und der Befüllstation (3) erfolgt.

2. Verfahren nach Anspruch 1, **dadurch gekennzeichnet, dass** die Verteilerleitung (8) eine Förderpumpe (9) aufweist, die in der Lage ist, eine turbulente Strömung zu erzeugen, und dadurch, dass die in der Leitung erfolgende Einspritzung in Strömungsrichtung vor der Förderpumpe (9) erfolgt.

3. Verfahren nach Anspruch 1 oder 2, **dadurch gekennzeichnet, dass** der Schwefelwasserstofffänger (H₂S-Fänger) aus organischen Metallsalzen, anorganischen Metallsalzen und ihren Mischungen ausgewählt ist.

4. Verfahren nach einem der Ansprüche 1 bis 3, **dadurch gekennzeichnet, dass** der Schwefelwasserstofffänger (H₂S-Fänger) aus der Gruppe ausgewählt wird, die aus den Metallsalzen Carboxylate, Oxide, Naphthenate, Sulfonate und ihren Mischungen besteht, vorzugsweise aus den Metallsalzen Carboxylate.

5. Verfahren nach einem der Ansprüche 1 bis 4, **dadurch gekennzeichnet, dass** die Temperatur der vernetzten Bitumen/Polymer-Zusammensetzung (PmB) beim Überführen zwischen 140°C und 190°C beträgt.

6. Verfahren nach einem der Ansprüche 1 bis 5, **dadurch gekennzeichnet, dass** das Überführen darin besteht, aus dem Reaktor (1) die vorgegebene Menge an vernetzter Bitumen/Polymer-Zusammensetzung (PmB) in Form eines Stroms zu entnehmen, der über die Verteilerleitung (8) geführt wird, und dadurch, dass das Einleiten des Schwefelwasserstofffängers (H₂S-Fänger) vom Beginn des Stroms an und ununterbrochen bis zum Ende des Stroms erfolgt.

7. Verfahren nach einem der Ansprüche 1 bis 6, **dadurch gekennzeichnet, dass** das Massenverhältnis von in die Leitung eingespritztem Schwefelwasserstofffänger (H₂S-Fänger) bezogen auf die vorgegebene Menge vernetzte Bitumen/Polymerzusammensetzung (PmB) zwischen 0,10% und 0,35%, vorzugsweise zwischen 0,2 und 0,3 % beträgt.

8. Verfahren nach einem der Ansprüche 1 bis 7, **dadurch gekennzeichnet, dass** das Herstellen der vernetzten Bitumen/Polymer-Zusammensetzung (PmB) umfasst:
- in dem Reaktor (1) Mischen von 90 Gewichts-% bis 99,7 Gewichts-%, vorzugsweise 94 Gewichts-% bis 99 Gewichts-% einer Bitumenbasis und 0,7 Gewichts-% bis 10 Gewichts-%, vorzugsweise 1 Gewichts-% bis 6 Gewichts% eines Elastomerpolymers bei einer Temperatur zwischen 90°C und 220°C, vorzugsweise zwischen 140°C und 190°C, bis ein homogenes Bitumen/PolymerGemisch erhalten wird,
- Vernetzen des Bitumen/Polymer-Gemischs durch Zugeben von 0,05 bis 5 Gewichts-% eines Vernetzungsmittels als Schwefellieferant und Erwärmen bei einer Vernetzungstemperatur zwischen 160 und 195°C während mindestens 15 Minuten, wobei die Gewichtsprozentanteile bezogen auf das Gesamtgewicht der vernetzten Bitumen/Polymer-Zusammensetzung (PmB) berechnet sind.

9. Verfahren nach Anspruch 8, **dadurch gekennzeichnet, dass** das Vernetzungsmittel als Schwefellieferant aus der Gruppe ausgewählt ist, die aus elementarem Schwefel, Hydrocarbyl-Polysulfiden, Vulkanisationsbeschleunigern als Schwefellieferanten und ihren Mischungen besteht.

10. Verfahren nach Anspruch 8 oder 9, **dadurch gekennzeichnet, dass** das Elastomerpolymer aus statistischen Copolymeren oder Blockcopolymeren aus einem aromatischen Monovinyl-Kohlenwasserstoff und einem konjugierten Dien ausgewählt ist.

11. Verfahren nach einem der Ansprüche 8 bis 10, **dadurch gekennzeichnet, dass** die Menge Vernetzungsmittel als Schwefellieferant zwischen 0,05 und 0,5 Gewichts-% bezogen auf das Gesamtgewicht der vernetzten Bitumen/Polymer-Zusammensetzung (PmB) beträgt.

12. Verfahren nach einem der Ansprüche 1 bis 11, **dadurch gekennzeichnet, dass** es einen Schritt zum Einleiten einer wirksamen Menge von mindestens einem Zusatzstoff und/oder mindestens einem Fluxmittel und/oder mindestens einem Verdünnungsmittel in die vernetzte Bitumen/Polymer-Zusammensetzung (PmB) beim Schritt des Überführens umfasst, und dadurch, dass das Einleiten durch in der Leitung erfolgendes Einspritzen in die Verteilerleitung (8) in Strömungsrichtung hinter dem Reaktor (1) und in Strömungsrichtung vor dem Lagerbehälter (2) und der Befüllstation (3) erfolgt.

13. Einheit zur Herstellung einer vernetzten Bitumen/Polymer-Zusammensetzung (PmB) für die Durchführung eines Verfahrens nach einem der Ansprüche 1 bis 12, umfassend :
- einen Reaktor (1), der mit einer Rührvorrichtung und Heizmitteln versehen ist,
- einen Lagerbehälter (2) für die vernetzte Bitumen/Polymer-Zusammensetzung (PmB),
- eine Befüllstation (3), die dafür vorgesehen ist, die vernetzte Bitumen/PolymerZusammensetzung (PmB) in mindestens einen Tank (4) eines Transportmittels (5) zu füllen, und
- Mittel zum Überführen (7) der Zusammensetzung (PmB) des Reaktors (1) in die Befüllstation (3) und/oder den Lagerbehälter (2),
**dadurch gekennzeichnet, dass** sie einen Vorratsbehälter (6) aufweist, der einen H₂S-Fänger aufnehmen soll, und dadurch, dass die Mittel zum Überführen (7) eine Verteilerleitung (8) aufweisen, die mit einer Förderpumpe (9) versehen ist, die in der Lage ist, eine turbulente Strömung zu erzeugen, und dadurch, dass der Vorratsbehälter (6) für den H₂S-Fänger mit der Verteilerleitung (8) durch Anschließen einer Anschlussleitung (10) in Strömungsrichtung vor dem Reaktor (1) und hinter der Förderpumpe (9) verbunden ist.

14. Herstellungseinheit nach Anspruch 13, **dadurch gekennzeichnet, dass** die Förderpumpe (9) eine Entnahmepumpe ist, die mit mindestens einem Filter ausgestattet ist.

15. Herstellungseinheit nach Anspruch 13 oder 14, **dadurch gekennzeichnet, dass** vor dem Anschließen an der Verteilerleitung (8) eine Dosierpumpe (13) an der Anschlussleitung (10) am Ausgang des Vorratsbehälters (6) befestigt wird.

## Claims

1. Method for producing a crosslinked bitumen/polymer composition with reduction of hydrogen sulfide emissions, comprising the following steps:
(i) preparing a crosslinked bitumen/polymer composition (PmB) in a reactor (1), and
(ii) transferring a predetermined amount of said composition from the reactor (1) to a storage tank (2) and/or directly to a charging station (3) via a distribution line (8), said composition (PmB) being maintained at a temperature of between 100°C and 220°C during said transfer, a reduction in hydrogen sulfide (H₂S) emissions being produced by online injection of an effective amount of a hydrogen sulfide (H₂S) scavenger during the transfer step (ii), said injection being carried out by continuous introduction of said hydrogen sulfide (H₂S) scavenger into the distribution line (8) downstream of the reactor (1), and upstream of the storage tank (2) and of the charging station (3).

2. Method according to Claim 1, **characterized in that** the distribution line (8) comprises a transfer pump (9) capable of generating a turbulent flow and **in that** the online injection is carried out upstream of the transfer pump (9).

3. Method according to either of Claims 1 and 2, **characterized in that** the hydrogen sulfide (H₂S) scavenger is chosen from organic metal salts, inorganic metal salts, and mixtures thereof.

4. Method according to any one of Claims 1 to 3, **characterized in that** the hydrogen sulfide (H₂S) scavenger is chosen from the group consisting of metal salts of carboxylates, of oxides, of naphthenates, of sulfonates and mixtures thereof, preferably from metal salts of carboxylates.

5. Method according to any one of Claims 1 to 4, **characterized in that** the temperature of the crosslinked bitumen/polymer composition (PmB) during the transfer is between 140°C and 190°C.

6. Method according to any one of Claims 1 to 5, **characterized in that** the transfer consists in discharging from the reactor (1) the determined amount of crosslinked bitumen/polymer composition (PmB) in the form of a flow channelled via the distribution line (8) and **in that** the introduction of the hydrogen sulfide (H₂S) scavenger is carried out as soon as said flow starts and in a manner that is uninterrupted until the end of said flow.

7. Method according to any one of Claims 1 to 6, **characterized in that** the weight ratio of hydrogen sulfide (H₂S) scavenger injected online relative to the predetermined amount of crosslinked bitumen/polymer composition (PmB) is between 0.10% and 0.35%, preferably between 0.2% and 0.3%.

8. Method according to any one of Claims 1 to 7, **characterized in that** the preparation of the crosslinked bitumen/polymer composition (PmB) comprises:
- mixing, in the reactor (1), from 90% to 99.7%, preferably from 94% to 99% by weight of a bitumen base and from 0.7% to 10%, preferably from 1% to 6% by weight of an elastomeric polymer, at a temperature of between 90°C and 220°C, preferably between 140°C and 190°C, until a homogeneous bitumen/polymer mixture is obtained,
- crosslinking said bitumen/polymer mixture by adding 0.05% to 5% by weight of a sulfur-donating crosslinking agent and heating at a crosslinking temperature of between 160 and 195°C for at least 15 minutes, the weight percentages being calculated relative to the total weight of the crosslinked bitumen/polymer composition (PmB).

9. Method according to Claim 8, **characterized in that** the sulfur-donating crosslinking agent is chosen from the group consisting of elemental sulfur, hydrocarbyl polysulfides, sulfur-donating vulcanization accelerators, and mixtures thereof.

10. Method according to either of Claims 8 and 9, **characterized in that** the elastomeric polymer is chosen from random or block copolymers of a monovinyl aromatic hydrocarbide and on a conjugated diene.

11. Method according to any one of Claims 8 to 10, **characterized in that** the amount of sulfur-donating crosslinking agent is between 0.05 and 0.5% by weight relative to the total weight of the crosslinked bitumen/polymer composition (PmB).

12. Method according to any one of Claims 1 to 11, **characterized in that** it comprises a step of introducing an effective amount of at least one additive and/or at least one fluxing agent and/or at least one diluent into the crosslinked bitumen/polymer composition (PmB) during the transfer step and **in that** said introduction is carried out by online injection into the distribution line (8) downstream of the reactor (1) and upstream of the storage tank (2) and of the charging station (3).

13. Unit for producing a crosslinked bitumen/polymer composition (PmB) for implementing a method according to any one of Claims 1 to 12, comprising:
- a reactor (1) equipped with a stirring device and with heating means,
- a tank (2) for storing said crosslinked bitumen/polymer composition (PmB),
- a charging station (3) intended for charging said crosslinked bitumen/polymer composition (PmB) in at least one tank body (4) of a transport means (5), and
- means for transferring (7) said composition (PmB) from the reactor (1) to the charging station (3) and/or to the storage tank (2),
**characterized in that** it comprises a vessel (6) intended to contain an H₂S scavenger and **in that** the transfer means (7) comprise a distribution line (8) equipped with a transfer pump (9) capable of generating a turbulent flow and **in that** the H₂S scavenger vessel (6) is connected to the distribution line (8) by tapping of a branch (10) upstream of the reactor (1) and downstream of the transfer pump (9).

14. Production unit according to Claim 13, **characterized in that** the transfer pump (9) is a drawing-off pump equipped with at least one filter.

15. Production unit according to either of Claims 13 and 14, **characterized in that** a metering pump (13) is mounted on the branch (10) at the outlet of the vessel (6) before the tapping on the distribution line (8).
